# EUROPÄISCHE PATENTSCHRIFT

(11) **EP 2 821 665 B1**
(45) Veröffentlichungstag und Bekanntmachung des Hinweises auf die Patenterteilung: **27.12.2017**
(21) Anmeldenummer: 14001961.3
(22) Anmeldetag: 06.06.2014
(51) Int. Cl.: F16D 3/70, F16F 1/393, F16F 15/124

(54) **Kombilager zur Dämpfung axialer und radialer Schwingungen**
Combination bearing for damping axial and radial vibrations
Dépôt combiné d'amortissement d'oscillations axiales et radiales

(30) Priorität: 11.06.2013 EP 13002985
(43) Veröffentlichungstag der Anmeldung: 07.01.2015
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen

(56) Entgegenhaltungen:
- EP-B1- 1 593 867
- WO-A1-2010/054808
- CA-A1- 2 843 624
- FR-A- 1 279 003
- FR-A1- 2 673 453
- GB-A- 618 962
- GB-A- 794 254

## Beschreibung

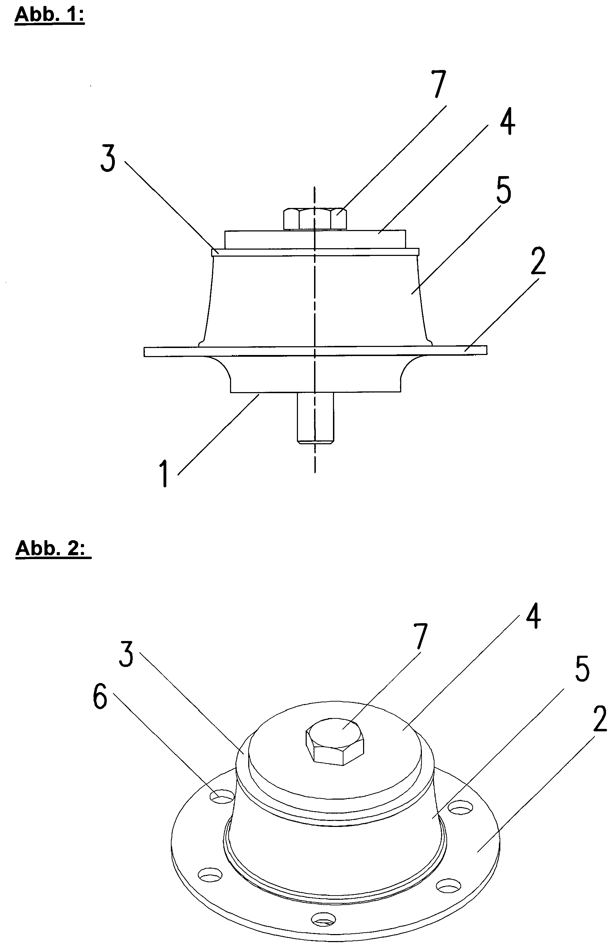

Die Erfindung betrifft eine elastomere Lagerung zur Reduzierung von Schwingungen in Maschinen, Vorrichtungen und Anlagen, die vorwiegend durch von außen einwirkende Kräfte verursacht werden. Aufgrund seiner sehr kompakten, platzsparenden Bauweise ist es in der Lage, in sämtliche Raumrichtungen auftretenden Kräfte unter optimaler Materialschonung zu verarbeiten. Das erfindungsgemäße Lager ist für den Einsatz für viele Anwendungsgebiete geeignet, insbesondere in Windkraftanlagen.
Im Stand der Technik werden diverse Lager für diese Zwecke beschrieben. Eine erste Lösung wird in der EP 1 593 867 B1 dargelegt, die allerdings dort in einer speziellen Kupplung zum Einsatz kommt. Ein solches Lager wird durch das Verspannen von zwei gegeneinander liegenden Konuselementen gebildet und ist schematisch in Abbildung 1 dargestellt. Die Kraftübertragung erfolgt bei diesem Doppelkonuslager vom Getriebeflansch zum Maschinenträger über die beiden verspannten diametralen Konuslager, welche durch die Kegelstücke fliegend gelagert und vorgespannt sind. Die Vorspannung erfolgt mit einer Schraube. Das System erlaubt eine einwandfreie Kraftübertragung, weist jedoch noch folgenden Nachteil auf: Beim Einleiten zum Beispiel eines Torsionsmoments um die Rotorwellenachse, welche von sämtlichen Lagern jeweils durch eine Radialkraft in diesen Lagern übertragen wird - greift die Radialkraft bei den Konuselementen in der Mitte des jeweiligen Konuslagers an, so dass die resultierende Radialkraft etwa in der Mitte zwischen den beiden Kegeln angreift. Dies hat ein Biegemoment zur Folge, welches über definierte Trennflächen übertragen werden muss. Die resultierende Belastung der Trennflächen und der Schraubverbindung erfordert, damit die Verbindung keinen Schaden nimmt, eine sehr große und in der Regel unerwünschte Dimensionierung der Berührungsflächen und der Schraubverbindung. Eine andere Lösung wird z.B. in GB 794,254 angegeben. Eine weitere interessante Lösung wird in der WO 2010/054808 vorgestellt. Hier wird ein Lager beschrieben, welches aus einem elastischen Sandwichelement im oberen Teil der Lagerkonstruktion und einem klassischen Konuselement im unteren Teil des Lagers besteht, wobei beide Elemente im Prinzip physisch und funktionell voneinander unabhängig sind, und lediglich über einen ebenfalls davon getrennten Klemmflansch miteinander verbunden sind. Mit diesem Lager können die auftretenden Biegemomente schon stark reduziert und verringert werden. Der Nachteil dieses Lagers ist, dass es immer noch viel Platz benötigt, und der Einbau relativ zeitaufwendig ist, insbesondere bei Ersatz bzw. Austausch.

Es bestand somit die Aufgabe, eine Verbesserung des Lagers der WO 2010/054808 oder auch eine Verbesserung des Lagers der GB 794,254 zur Verfügung zu stellen, welche die genannten Nachteile nicht aufweist, und darüber hinaus optimierte Schwingungseigenschaften für die genannten Zwecke besitzt. Diese Aufgabe wurde mit der vorliegenden Erfindung, wie sie im Folgenden dargestellt und durch die unabhängige Ansprüche 1 und 12 spezifiziert wird gelöst. Das erfindungsgemäße Lager sowie entsprechende Einsatzmöglichkeiten sind in den Abbildungen zeichnerisch dargestellt. Gegenstand der Erfindung ist somit ein Lager, welches ein elastisches Schichtfederelement aus dem Stand der Technik und ein elastisches Konuselement aus dem Stand der Technik mit einander kombiniert, aber im Gegensatz zu der in der WO 2010/054808 vorgestellten Lösung aus einem Stück gefertigt ist, und dadurch sehr kompakt und Platz sparend ist. Durch diese kompakte Bauweise ist es vielseitiger einsetzbar, beispielsweise für Lager und insbesondere Kupplungen im Fahrzeugbau, bei dem nur wenig Raum zu Verfügung steht. Weitere Anwendungsgebiete sind weiter unten aufgeführt. Des Weiteren ist das erfindungsgemäße Lager leichter herzustellen und wesentlich einfacher zu montieren, und gegebenenfalls auszutauschen.
Überraschenderweise wurde zudem festgestellt, dass durch die neue Baukonstruktion des erfindungsgemäßen Lagers die Dämpfungseigenschaften, insbesondere auf die oben genannten Biegemomente, die bei universell angreifenden Kräften auf das Lager wirken, je nach Anwendung nochmals deutlich um etwa durchschnittlich 10 - 30% verbessert werden können, gegenüber des Lagers aus der WO 2010/054808. Offensichtlich können bei der größeren Nähe des Schichtfederelementes und des Konuselementes zueinander, welche ein gemeinsames Elastomerelement (20, 12/13) besitzen, die aus verschiedenen Richtungen einwirkenden Kräfte auf das Lager besser aufgenommen, weitergeleitet und vom elastischen Material verarbeitet werden.
Gegenstand der Erfindung ist somit Kombilager aus einem elastischen Schichtfederlager (20) und einem elastischen Konuslager (21) im Wesentlichen umfassend (i) ein erstes steifes, aus einem harten Material, vorzugsweise Metall bestehenden Konuselement in Form eines mit flachen Abschlüssen bzw. Rändern versehenen vorzugsweise kompakten bzw. massiven Kegelstückes (1), welches senkrecht zur Lagerachse so angeordnet ist, dass der sich verjüngende Teil in das Innere des Lagers weist, und der sich verbreiternde Teil den unteren Abschluss des Lagers bildet, der mit der zu dämpfenden Vorrichtung über Befestigungs- und /oder Spannmittel (7) in Verbindung steht, wobei zumindest die konusförmigen Flächen, bzw. Seitenflächen oder Seitenränder des Kegelstücks (1) mit einem Elastomerelement (5) verbunden sind, welches auf der gegenüberliegenden nach oben gewandten Seite mit einer steifen aus hartem Material, vorzugsweise Metall, bestehenden und horizontal angeordneten Platte (3) versehen ist, die den oberen Abschluss des Lagers bildet; und (ii) ein zweites steifes Konuselement in Form einer mit einem gleichen oder ähnlichen, etwa 1 bis max. 50% abweichenden Konuswinkel wie das Kegelstück (1) ausgestatteten Glocke bzw. glockenähnlicher Profilform (9), welche an ihrem sich verjüngenden Ende ein steifes horizontal ausgerichtetes Plattenelement (8) aufweist und in das besagte Elastomerelement (5) im Inneren des Lagers eingebettet ist und dieses dadurch in ein oberes Schichtelement (12), welches an die Abschlussplatte (3) grenzt, und ein unteres Elastomerelement (13), welches mit dem Kegelstück (1) in Berührung steht, unterteilt, wobei das glockenähnliche Element (9) senkrecht zur Lagerachse so angeordnet ist, dass ein Teil des Innenraumes des Glockenelements (9) von dem besagten Kegelstück (1) eingenommen wird, welches mit der Innenwand über besagtes unteres elastisches Schichtelement (13) verbunden ist, wobei einerseits das Kegelstück (1) das konusförmige Elastomerelement (13) und das glockenähnliche Element (9) ein konusförmiges elastisches Lager (21) bilden, welches die in Bezug auf die Lagerachse radial einwirkenden Kräfte aufzunehmen und zu dämpfen vermag, und andrerseits das Plattenelement (8) des Glockenelementes (9), das flache Schichtelement (12) und die Abschlussplatte (3) ein horizontales flaches Schichtfederlager (20) bilden, welches in der Lage ist, die in Bezug auf die Lagerachse axial einwirkenden Kräfte aufzunehmen; wobei das Elastomerelement (5), die Abschlussplatte (3) sowie das Kegelstück (1) und das glockenförmige Element (9) über das Plattenelement (8) mindestens eine axiale, vorzugsweise zentrische Bohrung aufweist, die das Befestigungsmittel (7) aufnimmt, mit dessen Hilfe, das Lager befestigt und / oder vorgespant werden kann.

Zweckmäßigerweise weist das erfindungsgemäße Kombilager ein entsprechendes Glockenelement (9) auf, welchen neben der horizontalen Platte (8) an seinem offenen breiten unterem Ende einen senkrecht zu Lagerachse ausgerichteten horizontalen nach außen ausgerichteten steifen Rand (2) oder Flansch aufweist, der seitlich aus dem Elastomerelement (5) herausragt und mittels Bohrungen (6) als Befestigungsflansch für die zu dämpfende Vorrichtung dient.

Das erfindungsgemäße Kombilager ist vorzugsweise rotationssymmetrisch, rund und besitzt eine zentrische Bohrung zur Aufnahme des Befestigungsmittels (7), die der gedachten vertikalen Lagerachse entspricht. Prinzipiell können aber auch mehrere Bohrungen mit Befestigungsmitteln welche dann vorzugsweise um den Mittelpunkt der vertikalen Lagerachse angeordnet sind, vorliegen, was zur Folge hat, dass auch die anderen genannten Bauteile entsprechende Bohrungen an den betreffenden Stellen aufweisen müssen.

In einer besonderen Ausführungsform besitzt das erfindungsgemäße Lager entlang der mittigen Bohrung ein Distanzhülse (11), welche die Bohrung bzw. das Befestigungsmittel (7) (vorzugsweise eine Spannschraube) von der Elastomerschicht (5), bzw. den Elastomerelementen (12) und (13) räumlich trennt. Die Distanzhülse sitzt auf dem Kegelstück (1) auf und reicht bis zur Abschlussplatte (3), oder passt in die (zentrische) Bohrung der Abschlussplatte (3), oder aber reicht, in einer weiteren bevorzugten Ausführungsform kurz unterhalb der Abschlussplatte (3), so dass ein Freiraum oberhalb der Distanzhülse entsteht, welcher es ermöglicht, die umgebende höhere Elastomerschicht (5) (12) durch die Spannmittel (7) und die Abschlussplatte (3) ggf. über eine Druckplatte (4) zu verdichten. Gegenstand der Erfindung ist somit ein Kombilager, welches eine Distanzhülse (11) aufweist, welche kürzer ist als der Abstand zwischen Abschlussplatte (3) und der dem Konuselement (1), so dass bei Zusammendrücken des Elastomerlementes (5) von oben mittels der Spannmittel (7) gegenüber dem Konuselement (1) ein Vorspannung des Lagers erzielt wird.

Wie bereits beschrieben, besitzt das Elastomerelement (5), das sich aus der oberen elastomeren Schicht(12) und der unteren elastischen konusförmigen Schicht (13) zusammensetzt, und in dem das Glockenelement (9) mit dem Plattenelement (8) eingebettet ist, eine zentrische Bohrung, die mindestens so groß im Durchmesser ist, wie das vorgesehenen Spannmittel (7) oder bei Vorliegen einer Distanzhülse (11), so groß wie der Durchmesser der selbigen. Vorzugsweise ist diese Bohrung im Elastomerlelement (5) jedoch größer als die Bohrung mit oder ohne sie umschließende Distanzhülse. Dadurch entsteht in axialer Richtung ein Freiraum um die Bohrung oder das Spannmittel (7) bzw. die Distanzhülse herum. Kräfte, die auf das Lager einwirken, insbesondere radiale Kräfte führen effektiv zu einer Verdichtung des Elastmermaterials von (5) (12) (13), was nunmehr in diesen Freiraum hineingepresst werden kann. Gegenstand der Erfindung ist somit ein entsprechendes Kombilager, bei dem die axiale Bohrung des Elastomerelementes (5), bzw. der aus diesem gebildeten Elastomerschichten (12), (13) im Durchmesser größer ist als die axiale Bohrung, die durch die Abschlussplatte (3) und das Kegelstück (1) verläuft und das Befestigungs- /Spannmittel (7) aufnimmt, so dass hierdurch im Bereich des Elastomerelementes (5) um die axiale Bohrung herum ein Freivolumen vorhanden ist, welches es ermöglicht, dass Elastomermaterial bei Verdichtung in diesen Freiraum ausweichen kann.

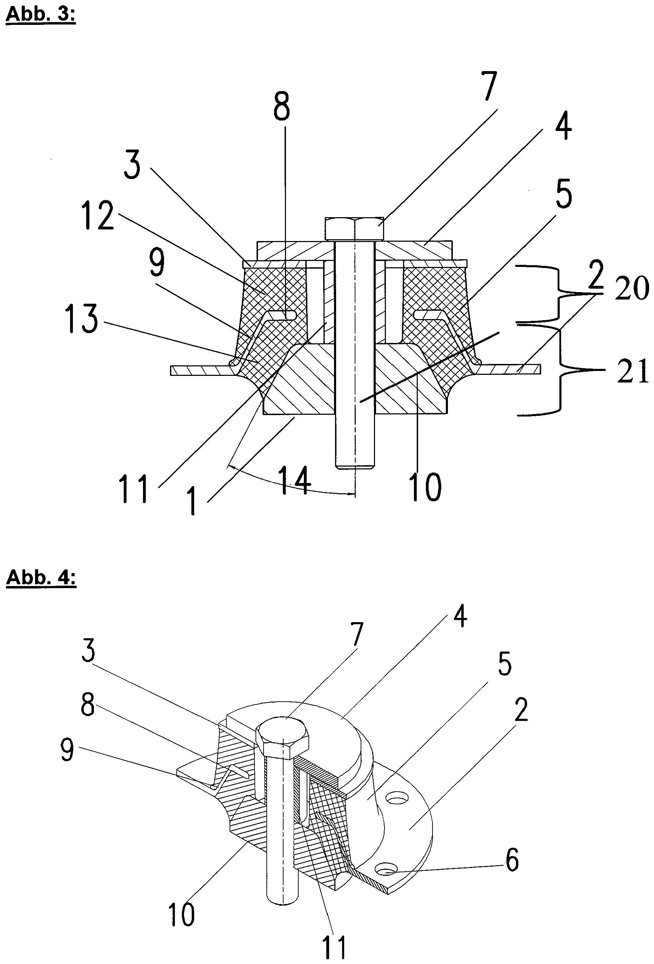

In der einfachsten Ausführungsform besteht das elastomere Schichtelement (13) sowie die konusförmige Schicht (12) durchgehend aus elastischem Material (Abb. 3, und 4). In weiteren und zum Teil bevorzugten Ausführungsformen weist die jeweilige Schicht mindestens eine Zwischenschicht (15) (16) aus steifem, vorzugsweise harten Material, vorzugsweise Metall, auf. Die Zwischenschichten, die ebenfalls entsprechend dimensionierte und positionierte Bohrungen zur Aufnahme des Befestigungsmittels (7) aufweisen, können dabei vollständig durch das Elastomermaterial des Elastomerelementes (5) hindurchgehen, besitzen also einen identischen Durchmesser der Bohrung wie das Elastomerelement (5), bzw. dessen Elemente (12) und (13) oder einen diesbezüglich größeren Durchmesser, so dass, das Elastomermaterial im mittigen Bereich durchgehend ist. Die Zwischenschichten oder Zwischenbleche sind in der Regel parallel zu den Schichten (12) (13) oder Platten (3) (8) angeordnet. Gegenstand der Erfindung ist somit ein entsprechendes Kombilager bei dem das Schichtelement (12) eine, zwei, drei oder vier steife Zwischenplatten (15) aufweist, und / oder das Schichtelement (13) eine, zwei, drei oder vier steife Zwischenplatten (16) aufweist.

Das Glockenelement (9) umfasst erfindungsgemäß die eigentliche Glocke mit den konusförmigen Seitenflächen. Der Deckel der Glocke wird von dem Plattenelement (8) wahrgenommen, das flach die Glocke nach oben abschließt und mittig die axiale Bohrung für das Befestigungsmittel (7) aufweist. Glockenkörper und Platte (8) können getrennte Teile sein oder aber aus einem Stück gefertigt sein. Wie bereits erwähnt besitzt bei einer weiteren Ausführungsform der Glockenkörper am unteren weiten Ende einen breiteren, steifen, vorzugsweise aus Metall bestehenden Rand der aus dem Elastomerelement (5) seitlich herausragt und die Funktion eines Flansches (2) besitzt, mit dessen Hilfe das Kombilager an die zu dämpfende Vorrichtung unter Verwendung von Bohrungen (6) und weiterer Befestigungsmittel angebracht werden kann. Dieser Flansch (2) kann erfindungsgemäß entweder als gesondertes Bauteil zur Verfügung gestellt werden, oder aber integraler Bestandteil des Glockenelementes (9) selbst sein. In einer bevorzugten Ausführungsform ist das betreffende Bauteil (9) aus einemStück gefertigt und umfass somit Flansch (2), Glockenkörper und Deckplatte (8) mit Bohrung.

Ebenfalls können das Konus- bzw. Kegelelement (1) und die Distanzhülse (11) getrennte Teile darstellen oder aus einem Stück gefertigt sein Das Kegelelement (1) ist vorzugsweise ein massives Teil; es kann aber prinzipiell auch eine Profilstruktur aufweisen.

Das Elastomerelement (5) welches sich zwischen der oberen Abschlussplatte (3) und dem Konus- bzw. Kegelstück (1) befindet und das Glockenelement (9, 2, 8) umschließt, ist entweder durchgehend oder in die beiden Teilschichten (12) und (13) aufgeteilt, je nachdem wie die betreffenden Bauteile, inklusive optionaler Zwischenplatten, gestaltet sind. Gegenstand der Erfindung ist somit auch ein Kombilager, bei dem die Bohrung der horizontalen Platte (8) des Glockenelementes (9) eine Durchmesser aufweist, der größer ist als der Durchmesser der entsprechenden Bohrung des Elastomerelementes (5), so dass eine Verbindung besteht zwischen den elastischen Schichtelementen (12) und (13).

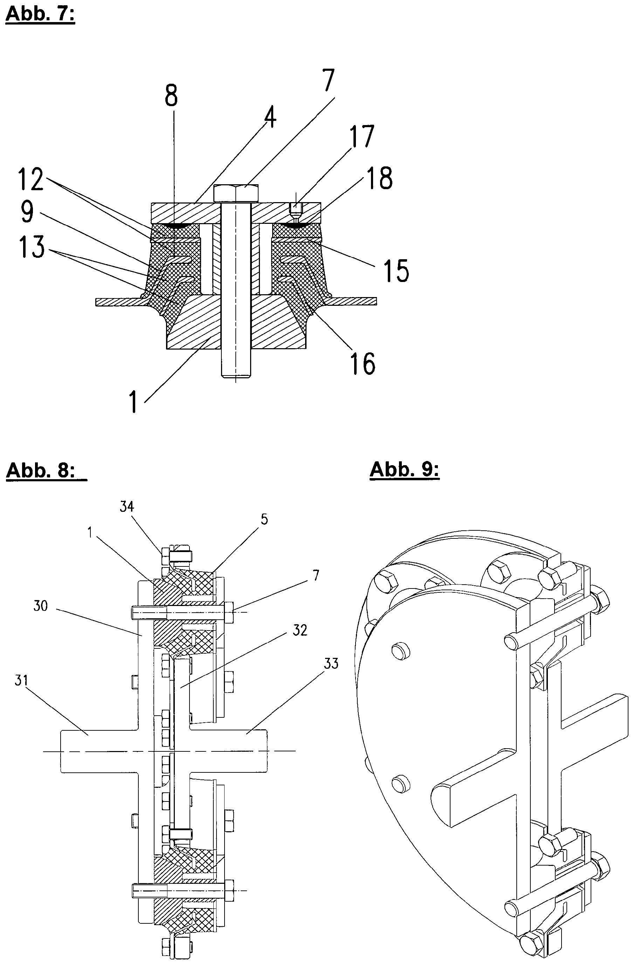

Das Kombilager kann erfindungsgemäß mit zusätzlichen Vorrichtungen ausgestattet sein, welche es ermöglichen, die Steifigkeit der Elastomerteile (12) (13) (5) variabel zu gestalten. Die kann beispielsweise mit einer hydraulischen Einrichtung erreicht werden. Hierzu besitzt das Elastomerelement (5) an einer geeigneten Stelle ein Freivolumen, in das von außerhalb des Lagers oder ggf. innerhalb des Lagers eine hydraulische Flüssigkeit in das Freivolumen hineingepumpt werden kann, wodurch gezielt Einfluss auf die Steifigkeit des Elastomers und damit auf die Vorspannung genommen werden kann. Gegenstand der Erfindung ist somit auch ein Kombilager, bei dem das Elastomerelement (5) eine Kammer zur Aufnahme einer hydraulischen Flüssigkeit aufweist, und das Lager eine Hydraulikvorrichtung oder Anschlüsse für eine Hydraulikvorrichtung besitzt. Wie in Abb. 7 dargestellt können diese hydraulischen Teile im oberen Bereich des Kombilagers , beispielsweise in und / oder unterhalb der der Abschlussplatte (3) bzw. der Druckplatte (4), untergebracht sein.

Erfindungsgemäß wird, wie erwähnt, das dämpfungsrelevante Sandwichelement, durch die Teile (3), (12) und (8) oder ggf. (3), (12), (8) und (9) gebildet, während das dämpfungsrelevante Konuselement sich aus den Bauteilen (8)(9) (13) und (1) zusammensetzt.

Die Steifigkeit des Sandwichelementes (20) ist erfindungsgemäß um etwa den Faktor 2 - 100, vorzugsweise 10 - 100, insbesondere 50 - 100 geringer als die radiale Steifigkeit des Konuselements (21).

Entsprechend dem Verhältnis der radialen Steifigkeiten erfolgt auch die radiale Kraftübertragung in dem Lager. Somit wird in dem Konuselement (21) etwa 2 - 100 mal so viel radiale Kraft übertragen wie in dem Sandwichelement (20). Durch die erfindungsgemäße kompakte Bauweise, bei der die Elemente (20) und (21) teilweise gemeinsame Teil umfassen, ist die radiale Kraftübertragung kaum noch nennenswert. Dies hat zur Folge, dass erfindungsgemäß kein wesentliches bzw. signifikantes Biegemoment übertragen werden muss, was zur Entlastung der axialen Teile und insbesondere der Spannmittel (7) führt, so dass dieses und auch das Spannmittel lediglich für die entstehenden Zug- und Druckkräfte dimensioniert werden muss.

Beide Elemente sind also in axialer Richtung miteinander verspannt. Dabei können beide Elemente in axialer Richtung die gleiche Steifigkeit haben, was jedoch nicht zwingend erforderlich ist. Das Konuselement (21), bzw. Konusfederlager (21) hat jedoch in radialer Richtung eine deutlich höhere Steifigkeit als das Sandwichelement bzw. Schichtfederlager (20).

Es hat sich weiterhin gezeigt, dass die Kräfteverteilung auf das gesamte Lagerelement besonders vorteilhaft ist, wenn das feste unelastische kegelförmige Konusstück (1) nicht durch eine einfache Kegelfläche gebildet wird, sondern ein konvexe Wölbung aufweist. In diesem Fall sollte vorzugsweise auch die Elastomerschicht (13) und die Seitenfläche des Glockenelementes (9) entsprechend konkav gekrümmt ist, so dass seine Innenfläche passgenau auf die Außenfläche des Konusstückes (9) zu liegen kommen kann.

Die für die erfindungsgemäßen Lager verwendeten Elastomermaterialien bestehen im Wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore A, insbesondere 30 bis 80 Shore A verwendet. Die Herstellung derartiger Elastomere unterschiedlicher Härte ist im Stand der Technik bekannt und in der einschlägigen Literatur hinreichend beschrieben.

Die steifen Zwischenplatten bzw. -schichten sind erfindungsgemäß aus Werkstoffen mit hoher Steifigkeit, hoher Festigkeit und geringer Kompressibilität gefertigt. Vorzugsweise sind dies Metallbleche, aber auch andere Materialien, wie harte Kunststoffe, Verbundwerkstoffe oder karbonfaserhaltige Werkstoffe sind einsetzbar. Die Zwischenbleche und die Elastomermaterialien werden in der Regel während der Vulkanisierung miteinander verbunden.

Die Konuselemente des erfindungsgemäßen Lagers sollten einen Konuswinkel (14) von 10 - 50° in Bezug zur Längsachse des Lagers bzw. zur axialen Bohrung, welche das Spannmittel (7) umfasst, aufweisen. Vorzugsweise besitzt es einen Konuswinkel von 25 - 50°. Der Konuswinkel bestimmt das Verhältnis zwischen radialer - und axialer Steifigkeit. Durch die entsprechende Wahl des Kegelstückes (1) mit erforderlichen Konuswinkel (14) kann so das Verhältnis der axialen zur radialen Steifigkeit individuell auf die Anwendung angepasst werden. Eine weitere Einflussnahme auf das genannte Verhältnis, und somit auf das Gesamtdämpfungsverhalten des erfindungsgemäßen Kombilagers kann natürlich auch durch variable bzw. unterschiedliche Schichtdicken im Schichtfederlager (20) bzw. im Konusfederlager (21), sowie durch unterschiedliche Shore-Härten der Elastomerschichten in (12) und (13) vorgenommen werden.

Das erfindungsgemäße Kombilager kommt für viele unterschiedliche Anwendungen in Betracht. Einsatzgebiete sind beispielsweise Befestigungen von Maschinen, welche Kräfte in allen Richtungen übertragen müssen und die eine definierte Steifigkeit in allen Raumachsen aufweisen müssen oder sollten. Gegenstand der Erfindung ist somit auch die Verwendung des erfindungsgemäßen Kombilagers zur Übertragung und Dämpfung von in allen Raumrichtungen auftretenden Kräften, Momenten und Schwingungen in Vorrichtungen, Maschinen und Anlagen. Dies ist insbesondere in Windkraftanlagen gegeben. Somit ist Gegenstand der Erfindung die Verwendung des Kombilagers insbesondere für Windkraftanlagen. Beispiele für das erfindungsgemäße Kombilager in Windkraftanlagen sind: Generatoraufhängung, isolierte Befestigung von Schaltschränken und Nebenaggregaten, und Bauteile besonders zur Aufhängung von Schaltschränken in rotierenden Rotornaben, welche sich durch die von den Rotorblättern eingeleiteten Kräfte besonders stark verformen, Befestigung des Maschinenhauses am Maschinenträger, Befestigung von Turmeinbauten an der Turmwandung.

Ferner ist das erfindungsgemäße Kombilager geeignet zur Befestigung von Aufbauten auf dem Maschinenhaus wie zum Beispiel Hubschrauber- Lande-Plattformen, Beleuchtungskörpern, Befestigung von zusätzlichen Bauteilen (zum Beispiel Spoilern) an Rotorblättern, und ähnlichen. Im Kraftfahrzeugbereich können die erfindungsgemäßen Lager als elastische Aufhängung von Motoren, Getrieben, Zusatzbauteilen wie zum Beispiel Tank-Aufhängung, Aufhängung von Aggregaten (zum Beispiel Kühlmaschinen an Lkw Aufbauten) Motorlagerung, Lichtmaschinenlagerung Lagerung von Klima Aggregaten und Lüftungsgeräten Verwendung finden. Im Bahnbereich können die erfindungsgemäßen Lager zur Aufhängung von Aggregaten und Fahrgastkabinen eingesetzt werden. Im Schiffsbereich ist es erforderlich alle Aggregate und Rohrleitungen von der sich durch Wellenbewegung verformenden Außenwand zu entkoppeln. Somit eignen sich die erfindungsgemäßen Lager der Aufhängung von Kabinen, der Aufhängung von Rohrleitungen, der Aufhängung von Motoren, Getrieben und der Schiffs-Schrauben-Lagerung.

Weitere Anwendungsmöglichkeiten sind: Aufhängung von Monitoren, Schautafeln, Seilbahn Gondelaufhängung mit fail-safe Funktion. Des Weiteren ist die kreisförmige Anordnung solcher Bauteile in Rotationskupplungen möglich, wie in Abb. 8 und 9 dargestellt ist. Aufgrund der biegemomentfreien Lasteinleitung eignen sich die Bauteile auch besonders gut für den Einsatz von Schwingungstilgern. Abb. 10 und 11 zeigen den Einsatz des erfindungsgemäßen Kombilagers als Torsionstilger mit großer Rotationsmasse zur Reduzierung von Schwingungen in rotierenden Maschinen. Die erfindungsgemäßen Lager können auch als Funktionsteile von Lineartilgern in axialer und in radialer Richtung verwendet werden.

Gegenstand der Erfindung ist letztlich auch eine Windkraftanlage, welche mindestens ein erfindungsgemäßes Kombilager aufweist.

### Beschreibung der Bezugsgrößen in den Abbildungen

- 1: Kegelelement / Konuselement
- 2: Befestigungsflansch / Rand
- 3: oberes Abschlussblech / obere Abschlussplatte
- 4: Druckscheibe
- 5: Elastomerelement (aus 12 und 13)
- 6: Befestigungsbohrung im Flansch 2
- 7: Befestigungsmittel / Schraube
- 8: Horizontale Platte (mit Position 9 und Position 2 verbunden)
- 9: Glockenelement (mit Position 8 und Position 2 verbunden)
- 10: Wirkrichtung der Krafteinleitung
- 11: Distanzhülse (kann mit Position 1 verbunden sein)
- 12: Horizontale Elastomerschicht
- 13: Konusförmige Elastomerschicht
- 14: Kegelwinkel
- 15: Zwischenplatte/ -blech in Schichtfeder
- 16: Zwischenplatte/ -blech in Konusfeder
- 17: Hydraulik Anschluss
- 18: Hydraulik Vorspannkammer
- 19: Vorspannmaß
- 20: Elastisches Schichtfederlager
- 21: Elastisches Konusfederlager
- 30: Antriebswelle
- 31: Antriebsscheibe
- 32: Abtriebscheibe
- 33: Anbtriebswelle
- 34: Befestigungsschraube
- 35: Tilger Rotationsmasse

### Beschreibung der Abbildungen

Abb. 1: erfindungsgemäßes Kombilager-Seitenansicht (außen)
Abb. 2: erfindungsgemäßes Kombilager- 3-D-Sicht (außen)
Abb. 3: erfindungsgemäßes Kombilager-Seitenansicht (innen - Details)
Abb. 4: erfindungsgemäßes Kombilager- 3-D-Sicht (innen- Details)

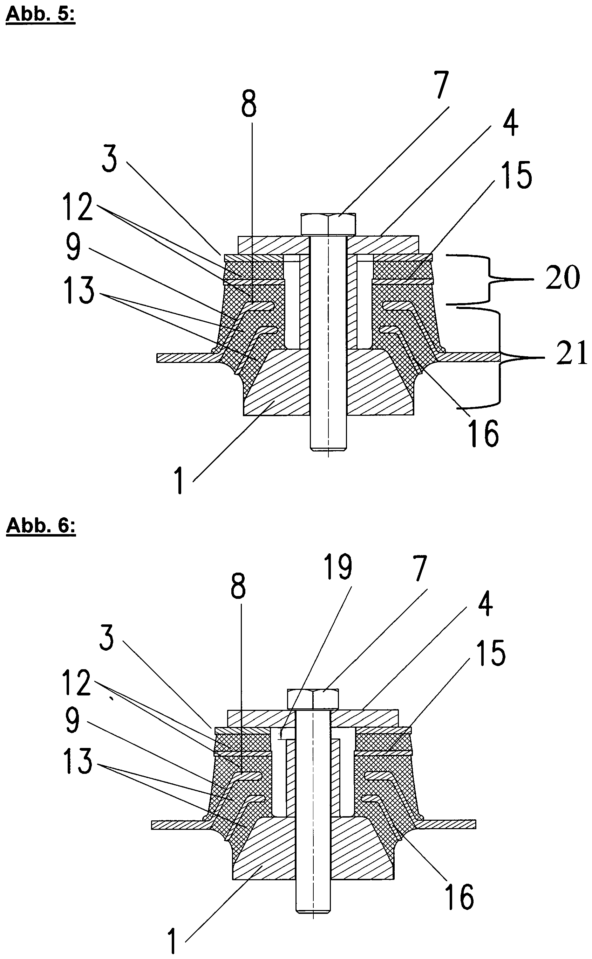

Abb. 5: erfindungsgemäßes Kombilager-Seitenansicht (Mehrschichten)
Abb. 6: erfindungsgemäßes Kombilager-Seitenansicht (Mehrschichten, mit Vorspannmaß))
Abb. 7: Kombilager gemäß Abb. 5, jedoch mit hydraulischen Vorspanneinrichtungen (17) und (18).
Abb. 8 und 9: Anwendung eines erfindungsgemäßen Kombilagers in einer Rotationskupplung.

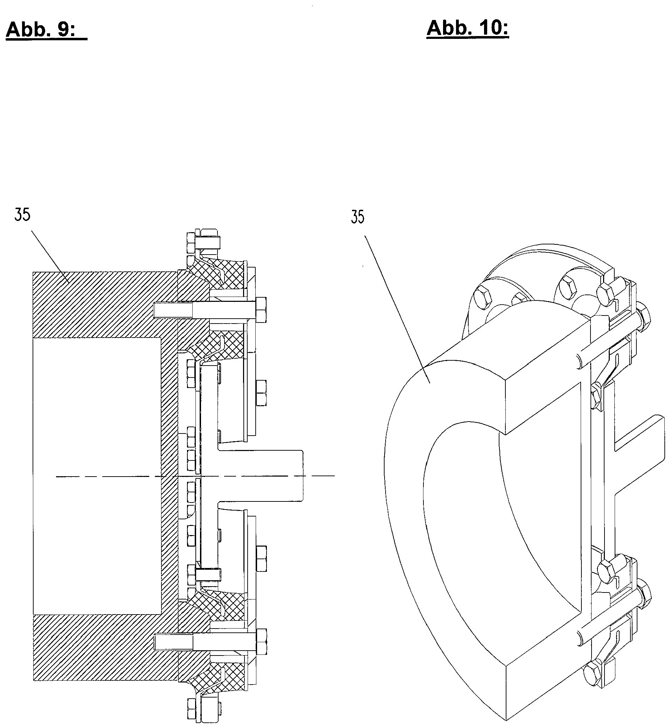

Abb. 10 und 11: Anwendung eines erfindungsgemäßen Kombilagers als Torsionstilger mit großer Rotationsmasse zur Reduzierung von Schwingungen in rotierenden Maschinen.

## Patentansprüche

1. Kombilager zur Dämpfung von Schwingungen unter Verringerung der Übertragung von Biegemomenten bei universell angreifenden Kräften in einer Vorrichtung umfassend
(a) ein elastisches Schichtfederlager (20), welches horizontal zu einer gedachten senkrechten Lagerachse angeordnet ist, so dass es axial auf die Lagerachse einwirkende Kräfte aufzunehmen vermag und gebildet wird von
-- einer steifen horizontal angeordneten Abschlussplatte (3),
-- einem oberen flachen elastischen Schichtelement (12) als Teil eines Elastomerelementes (5) und
-- einem glockenähnlichen steifen Element (8)(9), welches senkrecht zur Lagerachse angeordnet ist, und
(b) ein elastisches Konuslager (21), welches so angeordnet ist, dass es radial auf die besagte Lagerachse einwirkende Kräfte aufzunehmen und zu dämpfen vermag und gebildet wird von
-- dem glockenähnlichen steifen Element (8)(9),
-- einem unteren konusförmigen elastischen Schichtelement (13) als Teil des besagten Elastomerelementes (5), und
-- einem mit dem Schichtelement (13) in Berührung stehenden Kegelstück (1),
wobei
-- das Elastomerelement (5) sich zwischen der oberen Abschlussplatte (3) und dem Kegelstück (1) befindet;
-- das Kegelstück (1) ein steifes Konuselement ist und senkrecht zur Längsachse so angeordnet ist, dass der sich verjüngende Teil in das Innere des Lagers weist, und der sich verbreiternde Teil den unteren Abschluss des Lagers bildet,
-- das glockenähnliche Element (8) (9) den gleichen oder einen ähnlichen Konuswinkel wie das Kegelstück (1) aufweist, und ein Teil seines Innenraumes von dem besagten Kegelstück (1) eingenommen wird, welches mit der Innenwand des glockenähnlichen Elementes (8)(9) und dessen konusförmigen Flächen über besagtes unteres elastisches Schichtelement (13) verbunden ist, und
-- das Elastomerelement (5), die Abschlussplatte (3), das Kegelstück (1) und das glockenähnliche Element (8)(9) mindestens eine axiale, vorzugsweise zentrische Bohrung aufweist, die Befestigungs- und / oder Spannmittel (7) aufzunehmen vermag, mit deren Hilfe das Lager an der oder mit der zu dämpfenden Vorrichtung befestigt und / oder verspannt werden kann,
**dadurch gekennzeichnet, dass**
(i) das Kegelstück (1) mit einer oberen und unteren flachen Abschlussfläche versehen ist,
(ii) das glockenähnliche Element (8)(9) an seinem sich verjüngenden Ende ein steifes horizontal ausgerichtetes Plattenelement (8), welches den Deckel oder die Deckplatte des Glockenkörpers bildet und die Glocke nach oben abschließt, besitzt, und in das Elastomerelement (5) im Inneren des Lagers eingebettet und von diesem umschlossen ist, und
(iii) die Bohrung in der horizontalen Platte (8) des glockenähnlichen Elementes (9) einen Durchmesser aufweist, der größer ist als der Durchmesser der entsprechenden Bohrung des Elastomerelementes (5), so dass eine Verbindung besteht zwischen den elastischen Schichtelementen (12) und (13).

2. Kombilager nach Anspruch 1, **dadurch gekennzeichnet, dass** das Glockenelement (8)(9) an seinem offenen breiten Ende einen senkrecht zu Lagerachse ausgerichteten horizontalen nach außen ausgerichteten Rand (2) aufweist, der seitlich aus dem Elastomerelement (5) herausragt und als Befestigungsflansch für die zu dämpfende Vorrichtung dient.

3. Kombilager nach Anspruch 1 oder 2, **dadurch gekennzeichnet, dass** die axiale Bohrung eine Distanzhülse (11) zwischen Konuselement (1) und Abschlussplatte (3) aufweist.

4. Kombilager nach Anspruch 3, **dadurch gekennzeichnet, dass** die Distanzhülse (11) kürzer ist als der Abstand zwischen Abschlussplatte (3) und der dem Konuselement (1), so dass ein Vorspannmaß (19) entsteht, wodurch bei Zusammendrücken des Elastomerelementes (5) gegenüber dem Konuselement (1) mittels des Befestigungsmittels (7) eine Vorspannung des Lagers erzielt wird.

5. Kombilager nach einem der Ansprüche 1 - 4, **dadurch gekennzeichnet, dass** die axiale Bohrung des Elastomerelementes (5), bzw. der aus diesem gebildeten Elastomerschichten (12), (13) im Durchmesser größer ist als die axiale Bohrung, die durch die Abschlussplatte (3) und das Kegelstück (1) verläuft und das Befestigungs-/Spannmittel (7) aufnimmt, so dass hierdurch im Bereich des Elastomerelementes (5) um die axiale Bohrung herum ein Freivolumen vorhanden ist, welches es ermöglicht, dass Elastomermaterial bei Verdichtung in diesen Freiraum ausweichen kann.

6. Kombilager nach einem der Ansprüche 1 - 5, **dadurch gekennzeichnet, dass** das obere Schichtelement (12) mindestens eine steife Zwischenplatte (15) aufweist.

7. Kombilager nach einem der Ansprüche 1 - 6, **dadurch gekennzeichnet, dass** das untere Schichtelement (13) mindestens eine steife Zwischenplatte (16) aufweist.

8. Kombilager nach einem der Ansprüche 1 - 7, **dadurch gekennzeichnet, dass** das glockenähnliche Element (9), die Platte (8) und ggf. der Rand (2) aus einem Stück gefertigt sind.

9. Kombilager nach einem der Ansprüche 1 - 8, **dadurch gekennzeichnet, dass** das Konuselement (1) und die Distanzhülse (11) aus einem Stück gefertigt sind.

10. Kombilager nach einem der Ansprüche 1 - 9, **dadurch gekennzeichnet**, die Konuselemente (1) (9) einen Konuswinkel von 25 - 50° aufweisen.

11. Kombilager nach einem der Ansprüche 1 -10, **dadurch gekennzeichnet, dass** das Elastomerelement (5) eine Kammer zur Aufnahme einer hydraulischen Flüssigkeit aufweist, und das Lager eine Hydraulikvorrichtung oder Anschlüsse für eine Hydraulikvorrichtung besitzt.

12. Verwendung eines Kombilagers gemäß der Ansprüche 1 - 11 zur Übertragung und Dämpfung von in allen Raumrichtungen auftretenden Kräften, Momenten und Schwingungen in Vorrichtungen, Maschinen und Anlagen.

13. Verwendung eines Kombilagers gemäß Anspruch 12 für Windkraftanlagen.

14. Verwendung eines Kombilagers gemäß Anspruch 13 zur Dämpfung von Schwingungen und Geräuschen von Maschinenhaus, Gondel oder Getriebe von Windkraftanlagen.

15. Windkraftanlage, **dadurch gekennzeichnet, dass** sie mindestens ein Kombilager gemäß der Ansprüche 1 - 11 aufweist.

## Claims

1. Combination bearing for damping vibrations while reducing the transmission of bending moments in the case of universally acting forces in a device comprising
(a) an elastic leaf spring bearing (20) which is arranged horizontally to an imaginary vertical bearing axis, so that it is capable of absorbing forces acting axially on the bearing axis and is formed by
- a rigid horizontally arranged end plate (3),
- an upper flat elastic layer element (12) as part of an elastomer element (5) and
- a bell-like rigid element (8)(9) which is arranged perpendicular to the bearing axis, and
(b) an elastic cone bearing (21), which is arranged in such a way that it is capable of absorbing and damping forces acting radially on the said bearing axis and is formed by
- the bell-like rigid element (8)(9),
- a lower conical elastic layer element (13) as part of the said elastomer element (5), and
- a conical part (1) which is in contact with the layer element (13),
where
- the elastomer element (5) is located between the upper end plate (3) and the cone piece (1);
- the cone piece (1) is a rigid cone element and is arranged perpendicular to the longitudinal axis in such a way that the narrowing part points into the interior of the bearing, and the broadening part forms the lower end of the bearing,
- the bell-like element (8)(9) has the same or a similar cone angle as the cone piece (1), and part of its interior is occupied by the said cone piece (1), which is connected to the inside wall of the bell-like element (8)(9) and its conical surfaces via said lower elastic layer element (13), and
- the elastomer element (5), the end plate (3), the cone piece (1) and the bell-like element (8)(9) have at least one axial, preferably central hole which is capable of accommodating the fixing and/or tensioning means (7), with the aid of which the bearing can be attached to and/or tensioned with the device to be damped,
**characterised in that**
(i) the cone piece (1) is provided with an upper and lower flat end surface,
(ii) the bell-like element (8)(9) has at its narrowing end a rigid horizontally aligned plate element (8) which forms the lid or cover plate of the bell body and seals the bell off towards the top, and is embedded in the elastomer element (5) in the interior of the bearing and is surrounded thereby, and
(iii) the hole in the horizontal plate (8) of the bell-like element (9) has a diameter which is greater than the diameter of the corresponding hole of the elastomer element (5), so that a connection exists between the elastic layer elements (12) and (13).

2. Combination bearing according to Claim 1, **characterised in that** the bell element (8)(9) has at its open broad end a horizontal, outwardly directed edge (2) which is aligned perpendicular to the bearing axis, projects laterally out of the elastomer element (5) and serves as attachment flange for the device to be damped.

3. Combination bearing according to Claim 1 or 2, **characterised in that** the axial hole has a spacer sleeve (11) between the cone element (1) and the end plate (3).

4. Combination bearing according to Claim 3, **characterised in that** the spacer sleeve (11) is shorter than the distance between the end plate (3) and the cone element (1), so that a pretension dimension (19) forms, with the result that pre-tensioning of the bearing is achieved when the elastomer element (5) is compressed against the cone element (1) by means of the fixing means (7).

5. Combination bearing according to one of Claims 1 - 4, **characterised in that** the axial hole of the elastomer element (5), or of the elastomer layers (12), (13) formed therefrom, is greater in diameter than the axial hole which runs through the end plate (3) and the cone piece (1) and accommodates the fixing/tensioning means (7), so that a free space is consequently present around the axial hole in the region of the elastomer element (5), which enables elastomer material to move out into this free space on compaction.

6. Combination bearing according to one of Claims 1 - 5, **characterised in that** the upper layer element (12) has at least one rigid intermediate plate (15).

7. Combination bearing according to one of Claims 1 - 6, **characterised in that** the lower layer element (13) has at least one rigid intermediate plate (16).

8. Combination bearing according to one of Claims 1 - 7, **characterised in that** the bell-like element (9), the plate (8) and optionally the edge (2) are made from one piece.

9. Combination bearing according to one of Claims 1 - 8, **characterised in that** the cone element (1) and the spacer sleeve (11) are made from one piece.

10. Combination bearing according to one of Claims 1 - 9, **characterised in that** the cone elements (1) (9) have a cone angle of 25 - 50°.

11. Combination bearing according to one of Claims 1 - 10, **characterised in that** the elastomer element (5) has a chamber for the accommodation of a hydraulic fluid, and the bearing has a hydraulic device or connections for a hydraulic device.

12. Use of a combination bearing according to Claims 1 - 11 for the transmission and damping of forces, moments and vibrations occurring in all spatial directions in devices, machines and installations.

13. Use of combination bearing according to Claim 12 for wind turbines.

14. Use of a combination bearing according to Claim 13 for damping vibrations and noises from the nacelle, gondola or gearbox of wind turbines.

15. Wind turbine, **characterised in that** it has at least one combination bearing according to Claims 1 - 11.

## Revendications

1. Palier combiné pour amortir des vibrations tout en réduisant la transmission de moments de flexion dans le cas de forces opérant de manière universelle dans un dispositif comprenant :
(a) un palier à ressorts à lames élastique (20) qui est agencé horizontalement par rapport à un axe de palier vertical imaginaire, de telle sorte qu'il puisse absorber des forces opérant axialement sur l'axe de palier et qui est formé par :
- une plaque d'extrémité agencée horizontalement rigide (3),
- un élément de couche élastique plat supérieur (12) en tant que partie d'un élément en élastomère (5) et
- un élément rigide en forme de cloche (8)(9) qui est agencé perpendiculairement à l'axe de palier, et
(b) un cône de roulement élastique (21), lequel est agencé de telle sorte qu'il puisse absorber et amortir des forces opérant radialement sur ledit axe de palier et est formé par :
- l'élément rigide en forme de cloche (8)(9),
- un élément de couche élastique conique inférieur (13) en tant que partie dudit élément en élastomère (5), et
- une partie conique (1) qui est en contact avec l'élément de couche (13),
dans lequel :
- l'élément en élastomère (5) est situé entre la plaque d'extrémité supérieure (3) et la pièce de cône (1);
- la pièce de cône (1) est un élément de cône rigide et est agencée perpendiculairement à l'axe longitudinal de telle sorte que la partie en rétrécissement pointe dans l'intérieur du palier, et la partie en élargissement forme l'extrémité inférieure du palier,
- l'élément en forme de cloche (8)(9) présente le même angle de cône que la pièce de cône (1) ou un angle de cône similaire à l'angle de cône de celle-ci, et une partie de son intérieur est occupée par ladite pièce de cône (1), laquelle est connectée à la paroi interne de l'élément en forme de cloche (8)(9) et à ses surfaces coniques via ledit élément de couche élastique inférieur (13), et
- l'élément en élastomère (5), la plaque d'extrémité (3), la pièce de cône (1) et l'élément en forme de cloche (8)(9) comportent au moins un trou axial, de préférence central, qui peut recevoir le moyen de fixation et/ou de mise sous tension (7), à l'aide duquel le palier peut être lié au dispositif destiné à être amorti et/ou mis sous tension avec ce même dispositif destiné à être amorti,
**caractérisé en ce que** :
(i) la pièce de cône (1) est munie de surfaces d'extrémité planes supérieure et inférieure,
(ii) l'élément en forme de cloche (8)(9) comporte, au niveau de son extrémité en rétrécissement, un élément de plaque aligné horizontalement rigide (8) qui forme la plaque de couvercle ou de recouvrement du corps de cloche et qui scelle de façon étanche la cloche en direction du sommet, et est intégré dans l'élément en élastomère (5) dans l'intérieur du palier et est ainsi entouré, et
(iii) le trou dans la plaque horizontale (8) de l'élément en forme de cloche (9) présente un diamètre qui est plus grand que le diamètre du trou correspondant de l'élément en élastomère (5), de telle sorte qu'une connexion existe entre les éléments de couche élastiques (12) et (13).

2. Palier combiné selon la revendication 1, **caractérisé en ce que** l'élément de cloche (8)(9) comporte, au niveau de son extrémité large ouverte, un bord horizontal dirigé vers l'extérieur (2) qui est aligné perpendiculairement à l'axe de palier, qui fait saillie latéralement en dehors de l'élément en élastomère (5) et qui joue le rôle de bride de fixation pour le dispositif destiné à être amorti.

3. Palier combiné selon la revendication 1 ou 2, **caractérisé en ce que** le trou axial comporte une gaine d'espaceur (11) entre l'élément de cône (1) et la plaque d'extrémité (3).

4. Palier combiné selon la revendication 3, **caractérisé en ce que** la gaine d'espaceur (11) est plus courte que la distance entre la plaque d'extrémité (3) et l'élément de cône (1), de telle sorte qu'une dimension de pré-tension (19) se forme, le résultat étant qu'une mise sous pré-tension du palier est réalisée lorsque l'élément en élastomère (5) est comprimé contre l'élément de cône (1) au moyen du moyen de fixation (7).

5. Palier combiné selon l'une des revendications 1 - 4, **caractérisé en ce que** le trou axial de l'élément en élastomère (5), ou des couches en élastomère (12), (13) qui sont formées à partir de celui-ci, présente un diamètre plus grand que celui du trou axial qui traverse la plaque d'extrémité (3) et la pièce de cône (1) et reçoit le moyen de fixation/mise sous tension (7), de telle sorte qu'un espace libre est par conséquent présent autour du trou axial dans la région de l'élément en élastomère (5), ce qui permet que le matériau d'élastomère sorte et se déplace à l'intérieur de cet espace libre lors de la compression.

6. Palier combiné selon l'une des revendications 1 - 5, **caractérisé en ce que** l'élément de couche supérieur (12) comporte au moins une plaque intermédiaire rigide (15).

7. Palier combiné selon l'une des revendications 1 - 6, **caractérisé en ce que** l'élément de couche inférieur (13) comporte au moins une plaque intermédiaire rigide (16).

8. Palier combiné selon l'une des revendications 1 - 7, **caractérisé en ce que** l'élément en forme de cloche (9), la plaque (8) et en option, le bord (2) sont réalisés à partir d'une seule pièce.

9. Palier combiné selon l'une des revendications 1 - 8, **caractérisé en ce que** l'élément de cône (1) et la gaine d'espaceur (11) sont réalisés à partir d'une seule pièce.

10. Palier combiné selon l'une des revendications 1 - 9, **caractérisé en ce que** les éléments de cône (1) (9) présentent un angle de cône de 25 - 50°.

11. Palier combiné selon l'une des revendications 1 - 10, **caractérisé en ce que** l'élément en élastomère (5) comporte une chambre pour la réception d'un fluide hydraulique, et le palier comporte un dispositif hydraulique ou des connexions pour un dispositif hydraulique.

12. Utilisation d'un palier combiné selon les revendications 1 - 11 pour la transmission et l'amortissement de forces, de moments et de vibrations rencontrés dans toutes les directions spatiales dans des dispositifs, des machines et des installations.

13. Utilisation d'un palier combiné selon la revendication 12 pour des éoliennes.

14. Utilisation d'un palier combiné selon la revendication 13 pour amortir des vibrations et des bruits qui proviennent de la nacelle, de la gondole ou de la boîte de vitesses d'éoliennes.

15. Eolienne, **caractérisée en ce qu'**elle comporte au moins un palier combiné selon les revendications 1 - 11.
